# EUROPÄISCHE PATENTANMELDUNG

(11) **EP 2 146 072 A1**
(43) Veröffentlichungstag der Anmeldung: **20.01.2010**
(21) Anmeldenummer: 08104564.3
(22) Anmeldetag: 27.06.2008
(51) Int. Cl.: F02B 39/00, F01N 13/10, F02F 1/24, F02B 67/10

(54) **Brennkraftmaschine mit Zylinderkopf und Turbine**

(71) Anmelder: Ford Global Technologies, LLC, Dearborn, MI 48126 (US)
(72) Erfinder: Bartsch, Guenther, 51645, Gummersbach (DE); Friedfeldt, Rainer, 50354 Hürth (DE); Kuhlbach, Kai, 51427, Bergisch Gladbach (DE)
(74) Vertreter: Drömer, Hans-Carsten

(57) **Zusammenfassung**

Die Erfindung betrifft eine aufgeladene Brennkraftmaschine mit
- mindestens einem Zylinderkopf mit mindestens zwei Zylindern, der an einer Montage-Stirnseite mit einem Zylinderblock verbindbar ist und bei dem jeder Zylinder mindestens eine Auslaßöffnung (3a,3b) zum Abführen der Abgase aus dem Zylinder aufweist, wobei sich an jede Auslaßöffnung (3a,3b) eine Abgasleitung (4a,4b) anschließt, und
- mindestens einer Turbine (7a).
Es soll eine Brennkraftmaschine der genannten Art bereitgestellt werden, die hinsichtlich der Aufladung, insbesondere hinsichtlich der Drehmomentcharakteristik, optimiert ist.
Erreicht wird dies dadurch, daß
- die mindestens eine Turbine (7a) eine zweiflutige Turbine (7a) ist, die einen Eintrittsbereich (9) mit zwei Eintrittskanälen (9a) aufweist,
- mindestens zwei Zylinder in der Art konfiguriert sind, dass sie zwei Gruppen mit jeweils mindestens einem Zylinder bilden,
- die Abgasleitungen (4a,4b) der Zylinder jeder Zylindergruppe unter Ausbildung eines integrierten Abgaskrümmers (2',2'') innerhalb des Zylinderkopfes jeweils zu einer Gesamtabgasleitung (6',6'') zusammenführen, und
- wobei jeweils eine Gesamtabgasleitung (6',6'') in einen Eintrittskanal (9a) der zweiflutigen Turbine (7a) mündet.

## Beschreibung

Die Erfindung betrifft eine aufgeladene Brennkraftmaschine mit mindestens einem Zylinderkopf mit mindestens zwei Zylindern, der an einer Montage-Stirnseite mit einem Zylinderblock verbindbar ist und bei dem jeder Zylinder mindestens eine Auslaßöffnung zum Abführen der Abgase aus dem Zylinder aufweist, wobei sich an jede Auslaßöffnung eine Abgasleitung anschließt, und mindestens einer Turbine.

Des Weiteren betrifft die Erfindung ein Verfahren zum Betreiben einer aufgeladenen Brennkraftmaschine der oben genannten Art, bei der der mindestens eine Zylinderkopf mindestens drei Zylinder aufweist.

Im Rahmen der vorliegenden Erfindung umfaßt der Begriff Brennkraftmaschine Dieselmotoren, Ottomotoren, aber auch Hybrid-Brennkraftmaschinen.

Brennkraftmaschinen verfügen über einen Zylinderblock und einen Zylinderkopf, die zur Ausbildung der einzelnen Zylinder d. h. Brennräume miteinander verbunden werden, wobei zum Verbinden im Zylinderkopf und im Zylinderblock Bohrungen vorgesehen sind. Im Rahmen der Montage werden der Zylinderblock und der Zylinderkopf durch Aufeinanderlegen ihrer Montage-Stirnseiten in der Weise zueinander angeordnet, daß die Bohrungen miteinander fluchten. Mittels Gewindebolzen, die in die Bohrungen des Zylinderkopfes und des Zylinderblocks eingeführt und verschraubt werden, wird dann eine Verbindung hergestellt.

Der Zylinderblock weist zur Aufnahme der Kolben bzw. der Zylinderrohre eine entsprechende Anzahl an Zylinderbohrungen auf. Die Kolben werden axial beweglich in den Zylinderrohren geführt und bilden zusammen mit den Zylinderrohren und dem Zylinderkopf die Brennräume der Brennkraftmaschine aus. Folglich wird ein Brennraum jeweils von einem Kolben, einem Zylinderrohr und dem Zylinderkopf mitbegrenzt und mitgestaltet. Zur Abdichtung der Brennräume wird in der Regel zwischen dem Zylinderblock und dem Zylinderkopf eine Dichtung angeordnet.

Der Zylinderkopf dient üblicherweise zur Aufnahme des Ventiltriebs. Um den Ladungswechsel zu steuern, benötigt eine Brennkraftmaschine Steuerorgane und Betätigungseinrichtungen zur Betätigung der Steuerorgane. Im Rahmen des Ladungswechsels erfolgt das Ausschieben der Verbrennungsgase über die Auslaßöffnungen und das Füllen des Brennraums d. h. das Ansaugen des Frischgemisches bzw. der Frischluft über die Einlaßöffnungen. Zur Steuerung des Ladungswechsels werden bei Viertaktmotoren nahezu ausschließlich Hubventile als Steuerorgane verwendet, die während des Betriebs der Brennkraftmaschine eine oszillierende Hubbewegung ausführen und auf diese Weise die Ein- und Auslaßöffnungen freigeben und verschließen. Der für die Bewegung der Ventile erforderliche Ventilbetätigungsmechanismus einschließlich der Ventile selbst wird als Ventiltrieb bezeichnet.

Eine Ventilbetätigungseinrichtung umfaßt eine Nockenwelle, auf der eine Vielzahl von Nocken angeordnet ist. Grundsätzlich wird zwischen einer untenliegenden Nockenwelle und einer obenliegenden Nockenwelle unterschieden. Dabei wird Bezug genommen auf die Trennebene zwischen Zylinderkopf und Zylinderblock. Liegt die Nockenwelle oberhalb dieser Trennebene handelt es sich um eine obenliegende Nockenwelle, andernfalls um eine untenliegende Nockenwelle.

Obenliegende Nockenwellen werden üblicherweise ebenfalls im Zylinderkopf gelagert, wobei ein Ventiltrieb mit obenliegender Nockenwelle als weiteres Ventiltriebsbauteil einen Schwinghebel, einen Kipphebel oder einen Stößel aufweist.

Es ist die Aufgabe des Ventiltriebes die Einlaß- und Auslaßöffnungen der Brennkammer rechtzeitig freizugeben bzw. zu schließen, wobei eine schnelle Freigabe möglichst großer Strömungsquerschnitte angestrebt wird, um die Drosselverluste in den ein- bzw. ausströmenden Gasströmungen gering zu halten und eine möglichst gute Füllung des Brennraumes mit Frischgemisch bzw. ein effektives d. h. vollständiges Abführen der Abgase zu gewährleisten. Nach dem Stand der Technik werden Brennkammern daher auch häufig und zunehmend mit zwei oder mehr Einlaß- bzw. Auslaßöffnungen ausgestattet.

Die Einlaßkanäle, die zu den Einlaßöffnungen führen, und die Auslaßkanäle bzw. Abgasleitungen, die sich an die Auslaßöffnungen anschließen, sind nach dem Stand der Technik zumindest teilweise im Zylinderkopf integriert. Die Abgasleitungen der Auslaßöffnungen eines einzelnen Zylinders werden dabei in der Regel - innerhalb des Zylinderkopfes - zu einer dem Zylinder zugehörigen Teilabgasleitung zusammengeführt, wobei diese Teilabgasleitungen dann außerhalb des Zylinders unter Ausbildung eines sogenannten Krümmers zusammengeführt werden; häufig zu einer einzelnen Gesamtabgasleitung.

Stromabwärts des Krümmers werden die Abgase dann gegebenenfalls der Turbine eines Abgasturboladers und/oder einem oder mehreren Abgasnachbehandlungssystemen zugeführt.

Dabei ist man zum einen bemüht, den bzw. die Abgasturbolader möglichst nahe am Auslaß der Brennkraftmaschine anzuordnen, um auf diese Weise die Abgasenthalpie der heißen Abgase, die maßgeblich vom Abgasdruck und der Abgastemperatur bestimmt wird, optimal nutzen zu können und ein schnelles Ansprechverhalten des Turboladers zu gewährleisten. Zum anderen soll auch der Weg der heißen Abgase zu den verschiedenen Abgasnachbehandlungssystemen möglichst kurz sein, damit den Abgasen wenig Zeit zur Abkühlung eingeräumt wird und die Abgasnachbehandlungssysteme möglichst schnell ihre Betriebstemperatur bzw. Anspringtemperatur erreichen, insbesondere nach einem Kaltstart der Brennkraftmaschine.

In diesem Zusammenhang ist man daher grundsätzlich bemüht, die thermische Trägheit des Teilstücks der Abgasleitung zwischen Auslaßöffnung am Zylinder und Abgasnachbehandlungssystem bzw. zwischen Auslaßöffnung am Zylinder und Abgasturbolader bzw. Turbine zu minimieren, was durch Reduzierung der Masse und der Länge dieses Teilstückes erreicht werden kann.

Darüber hinaus wird im Hinblick auf den Einsatz eines Turboladers angestrebt, den Druckverlust in der Abgasströmung bis zum Eintritt in die Turbine möglichst gering zu halten, was durch eine geeignete Strömungsführung und eine weitestgehende Verkürzung der zu überbrückenden Wegstrecke d. h. der relevanten Abgasleitungen erreicht werden kann. Zur Verbesserung des Ansprechverhaltens sollte das Abgasvolumen in den Abgasleitungen stromaufwärts der Turbine möglichst gering sein.

Um den Druckverlust in den Abgasleitungen stromaufwärts der Turbine zu minimieren, sollten die Abgasströmungen nicht häufig umgelenkt werden bzw. möglichst geringfügige Richtungsänderungen erfahren. Jede Richtungsänderung der Abgasströmung - beispielsweise infolge einer Krümmung der Abgasleitung - hat einen Druckverlust in der Abgasströmung und damit einen Energieverlust zur Folge.

Um die Aufladung der Brennkraftmaschine bzw. die Drehmomentcharakteristik der aufgeladenen Brennkraftmaschine zu verbessern, sind weitere Maßnahmen erforderlich, weshalb im Folgenden kurz auf die Abgasturboaufladung als die am meisten eingesetzte Aufladetechnik eingegangen werden soll.

In der Regel wird nämlich für die Aufladung einer Brennkraftmaschine ein Abgasturbolader eingesetzt, bei dem ein Verdichter und eine Turbine auf derselben Welle angeordnet sind, wobei der heiße Abgasstrom der Turbine zugeführt wird und sich unter Energieabgabe in dieser Turbine entspannt, wodurch die Welle in Drehung versetzt wird. Die vom Abgasstrom an die Turbine und schließlich an die Welle abgegebene Energie wird für den Antrieb des ebenfalls auf der Welle angeordneten Verdichters genutzt. Der Verdichter fördert und komprimiert die ihm zugeführte Ladeluft, wodurch eine Aufladung der Zylinder erreicht wird.

Die Aufladung dient in erster Linie der Leistungssteigerung der Brennkraftmaschine. Die für den Verbrennungsprozeß benötigte Luft wird dabei verdichtet, wodurch jedem Zylinder pro Arbeitsspiel d. h. pro Arbeitsprozeß eine größere Luftmasse zugeführt werden kann. Dadurch können die Kraftstoffmasse und damit der Mitteldruck pₘₑ gesteigert werden.

Die Aufladung ist daher ein geeignetes Mittel, bei unverändertem Hubraum die Leistung einer Brennkraftmaschine zu steigern, oder bei gleicher Leistung den Hubraum zu reduzieren. In jedem Fall führt die Aufladung zu einer Erhöhung der Bauraumleistung und einer günstigeren Leistungsmasse. Bei gleichen Fahrzeugrandbedingungen läßt sich so das Lastkollektiv zu höheren Lasten hin verschieben, wo der spezifische Kraftstoffverbrauch niedriger ist. Letzteres wird auch als Downsizing bezeichnet.

Die Aufladung unterstützt folglich das ständige Bemühen in der Entwicklung von Verbrennungsmotoren, den Kraftstoffverbrauch zu minimieren, d. h. den Wirkungsgrad der Brennkraftmaschine zu verbessern. Ein weiteres grundsätzliches Ziel ist es, die Schadstoffemissionen zu reduzieren. In diesem Zusammenhang kann die Aufladung der Brennkraftmaschine ebenfalls zielführend sein. Bei gezielter Auslegung der Aufladung können nämlich Vorteile im Wirkungsgrad und bei den Abgasemissionen erzielt werden.

Nach dem Stand der Technik wird ein spürbarer Drehmomentabfall bei Unterschreiten einer bestimmten Drehzahl beobachtet. Dieser Effekt ist unerwünscht und zählt zu den gravierendsten Nachteilen der Abgasturboaufladung.

Verständlich wird dieser Drehmomentabfall, wenn berücksichtigt wird, dass das Ladedruckverhältnis vom Turbinendruckverhältnis abhängt. Wird beispielsweise bei einem Dieselmotor die Motorendrehzahl verringert, führt dies zu einem kleineren Abgasmassenstrom und damit zu einem kleineren Turbinendruckverhältnis. Dies hat zur Folge, dass zu niedrigeren Drehzahlen hin das Ladedruckverhältnis ebenfalls abnimmt, was gleichbedeutend ist mit einem Drehmomentabfall.

Grundsätzlich kann dabei dem Abfall des Ladedruckes durch eine Verkleinerung des Turbinenquerschnittes und der damit einhergehenden Steigerung des Turbinendruckverhältnisses entgegengewirkt werden. Letztendlich wird damit dem Drehmomentabfall nur in geringem Maße entgegengewirkt und der Drehmomentabfall weiter zu geringeren Drehzahlen hin verschoben. Zudem sind dieser Vorgehensweise d. h. der Verkleinerung des Turbinenquerschnittes Grenzen gesetzt, da die gewünschte Aufladung und Leistungssteigerung auch bei hohen Drehzahlen uneingeschränkt und in dem gewünschten Maße möglich sein soll.

Die Drehmomentcharakteristik einer aufgeladenen Brennkraftmaschine wird nach dem Stand der Technik durch unterschiedliche Maßnahmen zu verbessern versucht.

Beispielsweise durch eine kleine Auslegung des Turbinenquerschnittes und gleichzeitiger Abgasabblasung, wobei die Abgasabblasung mittels Ladedruck oder mittels Abgasdruck gesteuert werden kann. Eine derartige Turbine wird auch als Waste-Gate-Turbine bezeichnet. Überschreitet der Abgasmassenstrom eine kritische Größe wird ein Teil des Abgasstromes im Rahmen der sogenannten Abgasabblasung mittels einer Bypaßleitung an der Turbine vorbei geführt. Diese Vorgehensweise hat aber - wie bereits erwähnt - den Nachteil, daß das Aufladeverhalten bei höheren Drehzahlen unzureichend ist. Auch eine kleine Auslegung des Turbinenquerschnittes zusammen mit einer Ladeluftabblasung ist möglich, wobei diese Variante energetisch nachteilig ist.

Eine Turbine mit variabler Turbinengeometrie gestattet eine Anpassung der Turbinengeometrie bzw. des wirksamen Turbinenquerschnittes an den jeweiligen Betriebspunkt der Brennkraftmaschine, so daß eine Regelung der Turbinengeometrie im Hinblick auf niedrige und hohe Drehzahlen als auch für niedrige und hohe Lasten erfolgen kann.

Grundsätzlich können zur Verbesserung der Drehmomentcharakteristik der Brennkraftmaschine auch mehrere Turbolader eingesetzt werden, deren Turbinen bzw. Verdichter in Reihe bzw. parallel angeordnet sind.

Vor dem Hintergrund des oben Gesagten ist es die Aufgabe der vorliegenden Erfindung, eine aufgeladene Brennkraftmaschine gemäß dem Oberbegriff des Anspruchs 1 d. h. der gattungsbildenden Art bereitzustellen, die hinsichtlich der Aufladung, insbesondere hinsichtlich der Drehmomentcharakteristik, optimiert ist.

Eine weitere Teilaufgabe der vorliegenden Erfindung ist es, ein Verfahren zum Betreiben einer aufgeladenen Brennkraftmaschine der oben genannten Art, bei der der mindestens eine Zylinderkopf mindestens drei Zylinder aufweist, aufzuzeigen.

Gelöst wird die erste Teilaufgabe durch eine aufgeladene Brennkraftmaschine mit
- mindestens einem Zylinderkopf mit mindestens zwei Zylindern, der an einer Montage-Stirnseite mit einem Zylinderblock verbindbar ist und bei dem jeder Zylinder mindestens eine Auslaßöffnung zum Abführen der Abgase aus dem Zylinder aufweist, wobei sich an jede Auslaßöffnung eine Abgasleitung anschließt, und
- mindestens einer Turbine,
   die dadurch gekennzeichnet ist, dass
- die mindestens eine Turbine eine zweiflutige Turbine ist, die einen Eintrittsbereich mit zwei Eintrittskanälen aufweist,
- mindestens zwei Zylinder in der Art konfiguriert sind, dass sie zwei Gruppen mit jeweils mindestens einem Zylinder bilden,
- die Abgasleitungen der Zylinder jeder Zylindergruppe unter Ausbildung eines integrierten Abgaskrümmers innerhalb des Zylinderkopfes jeweils zu einer Gesamtabgasleitung zusammenführen, und
- die beiden Gesamtabgasleitungen mit der zweiflutigen Turbine verbunden sind, wobei jeweils eine Gesamtabgasleitung in einen Eintrittskanal mündet.

Vorteilhaft sind Ausführungsformen der Brennkraftmaschine, bei denen der mindestens eine Zylinderkopf mindestens drei Zylinder aufweist.

Erfindungsgemäß wird mindestens eine zweiflutige Turbine zur Aufladung der Brennkraftmaschine eingesetzt. D. h. die Turbine des eingesetzten Abgasturboladers verfügt über einen Eintrittsbereich mit zwei Eintrittskanälen.

Zweiflutige Turbinen eröffnen die Möglichkeit und bieten den Vorteil, die Abgasleitungen der Zylinder gruppenweise unter Ausbildung von zwei separaten Abgaskrümmern zu zwei Gesamtabgasleitungen zusammenzuführen und diese beiden Gesamtabgasleitungen getrennt voneinander der Turbine zu zuführen. Dabei mündet jeweils eine Gesamtabgasleitung in einen Eintrittskanal der zweiflutigen Turbine. Die Zusammenführung der beiden in den Gesamtabgasleitungen geführten Abgasströmungen erfolgt gegebenenfalls stromabwärts der Turbine, aber vorliegend nicht stromaufwärts der Turbine. Eine Gesamtabgasleitung mündet bereits im erfindungsgemäßen Sinne in einen Eintrittskanal der Turbine, wenn der in der Gesamtabgasleitung geführte Abgasstrom im Wesentlichen - vorzugsweise vollständig - in den der Gesamtabgasleitung zugeordneten Eintrittskanal gelangt.

Der Einsatz der zweiflutigen Turbine gestattet es, die Zylinder in der Art zu konfigurieren d. h. zu gruppieren, dass sich die dynamischen Wellenvorgänge in den Abgasleitungen einer Zylindergruppe möglichst wenig nachteilig beeinflussen. Zum einen sollen die sich in den Abgasleitungen ausbreitenden Druckwellen nicht gegenseitig abschwächen. Zum anderen sollten die Zylinder einer Zylindergruppe vorzugsweise einen möglichst großen Versatz hinsichtlich ihrer Arbeitsprozesse aufweisen, damit sich die in einer Zylindergruppe zusammengefaßten Zylinder nicht gegenseitig beim Ladungswechsel nachteilig beeinflussen bzw. behindern.

Wenn zu Beginn des Ladungswechsels eine Auslaßöffnung durch Betätigen eines Auslaßventil geöffnet wird, strömen die Verbrennungsgase aufgrund des gegen Ende der Verbrennung im Zylinder vorherrschenden hohen Druckniveaus und der damit verbundenen hohen Druckdifferenz zwischen Brennraum und Abgastrakt d. h. Abgasleitung mit hoher Geschwindigkeit durch die Auslaßöffnung in die Abgasleitung. Dieser druckgetriebene Strömungsvorgang wird durch eine hohe Druckspitze begleitet, die auch als Vorlastausstoß bezeichnet wird und sich entlang der Abgasleitungen mit Schallgeschwindigkeit fortpflanzt.

Werden die Abgasleitungen in der Weise gruppiert, dass die hohen Drücke, insbesondere die Vorlastausstöße erhalten werden können, eignet sich eine zweiflutige Turbine insbesondere für eine Stoßaufladung, womit auch hohe Turbinendruckverhältnisse bei niedrigen Drehzahlen erzielt werden können.

Hinsichtlich des Ladungswechsels ist es vorteilhaft die Zylindern in der Art zu gruppieren, dass, wenn die mindestens eine Auslaßöffnung eines Zylinders einer Gruppe öffnet, die Auslaßöffnungen der anderen Zylinder dieser Gruppe geschlossen sind bzw. die Auslaßöffnungen der anderen Zylinder dieser Gruppe zu dem Zeitpunkt geschlossen sind, zu dem die Druckwelle bzw. der Vorlastausstoß des sich öffnenden Zylinders an der Auslaßöffnung eines anderen Zylinders ankommt bzw. erwartet wird. Auf diese Weise kann ein Rückströmen von Abgas durch die Auslaßöffnung in den Brennraum vermieden werden.

Der Einsatz einer zweiflutigen Turbine schafft auch mehr Freiheiten bei der Festlegung der Steuerzeiten der Ventile eines Zylinder, da sich gegebenenfalls nachteilig beeinflussende Zylindern in geeigneter Weise voneinander getrennt werden, nämlich vorzugsweise in der Art, dass die Zylinder einer Zylindergruppe einen möglichst großen Versatz hinsichtlich ihrer Arbeitsprozesse aufweisen. So können grundsätzlich die Öffnungszeiten der Ventile, insbesondere der Auslaßventile, verlängert werden bzw. die Schließzeit der Auslaßventile nach spät verschoben werden, ohne dass zu befürchten ist, dass der Ladungswechsel eines Zylinders, insbesondere der Vorlastausstoß eines Zylinders, für ein Rückströmen von Abgas durch die Auslaßöffnung eines anderen Zylinders in den Brennraum sorgt. Untersuchungen haben gezeigt, dass über die Steuerzeiten der Ventile maßgeblich Einfluß genommen werden kann auf den Wirkungsgrad und die Schadstoffemissionen, insbesondere die Kohlendioxidemissionen (CO₂).

Erfindungsgemäß werden die Abgasleitungen der Zylinder jeder Zylindergruppe unter Ausbildung eines integrierten Abgaskrümmers innerhalb des Zylinderkopfes jeweils zu einer Gesamtabgasleitung zusammengeführt.

Wie bereits weiter oben erörtert wurde, ist man grundsätzlich bestrebt, die Turbine eines Abgasturboladers möglichst nahe am Auslaß der Brennkraftmaschine anzuordnen und die Wege der heißen Abgase zu den verschiedenen Abgasnachbehandlungssystemen möglichst kurz zu gestalten. Um dies zu realisieren, ist die weitestgehende Integration der Abgasleitungen in den Zylinderkopf - wie bei der erfindungsgemäßen Brennkraftmaschine - zielführend.

Die Länge der Abgasleitungen wird durch eine Integration in den Zylinderkopf verringert. Zum einen wird dadurch das Leitungsvolumen d. h. das Abgasvolumen der Abgasleitungen stromaufwärts der Turbine verkleinert, so dass das Ansprechverhalten der stromabwärts der Krümmer angeordneten Turbine verbessert wird. Zum anderen führen die verkürzten Abgasleitungen auch zu einer geringeren thermischen Trägheit des Abgassystems stromaufwärts der Turbine, so dass sich die Temperatur der Abgase am Turbineneintritt erhöht, weshalb auch die Enthalpie der Abgase am Eintritt der Turbine höher ist und gegebenenfalls stromabwärts der Turbine vorgesehene Abgasnachbehandlungssysteme schneller eine erforderliche Mindestbetriebstemperatur erreichen.

Da sich die Leitungslängen der einzelnen Abgasleitungen durch eine Integration in den Zylinderkopf verkürzen, steigt grundsätzlich auch die Gefahr, dass sich die Zylinder gegenseitig beim Ladungswechsel behindern bzw. sich die dynamischen Wellenvorgänge in den Abgasleitungen der Zylinder nachteilig beeinflussen, was eigentlich vermieden werden sollte.

Insofern ist der Einsatz einer zweiflutigen Turbine insbesondere im Zusammenhang mit der erfindungsgemäßen Integration der Abgasleitungen in den Zylinderkopf vorteilhaft, da auf diese Weise die Abgasströmungen zumindest bis zum Eintritt in die Turbine voneinander separiert werden können. Die bei der erfindungsgemäßen Brennkraftmaschine angewendete Kombination aus zweiflutiger Turbine und in den Zylinderkopf integrierten Abgasleitungen führt somit im Zusammenwirken dieser beiden Maßnahmen zu einem Synergieeffekt, der über die Vorteile jeder einzelnen Maßnahme für sich hinausgeht.

Die erfindungsgemäße Integration der Abgasleitungen gestattet darüber hinaus ein möglichst dichtes Packaging der Antriebseinheit.

Damit wird die erste der Erfindung zugrunde liegende Teilaufgabe gelöst, nämlich eine aufgeladene Brennkraftmaschine gemäß dem Oberbegriff des Anspruchs 1 bereitzustellen, die hinsichtlich der Aufladung, insbesondere hinsichtlich der Drehmomentcharakteristik, optimiert ist.

Die erfindungsgemäße Brennkraftmaschine kann auch zwei Zylinderköpfe aufweisen, beispielweise, wenn die Zylinder auf zwei Zylinderbänke verteilt angeordnet sind. Es sind auch Ausführungsformen ausführbar, bei denen nicht die Abgasleitungen sämtlicher Zylinder eines Zylinderkopfes zu zwei Gesamtabgasleitungen zusammengeführt werden, sondern nur einige der im Zylinderkopf angeordneten Zylinder in der erfindungsgemäßen Weise gruppiert werden.

Vorteilhaft sind aber insbesondere Ausführungsformen, bei denen die Abgasleitungen sämtlicher Zylinder des Zylinderkopfes innerhalb des Zylinderkopfes zu zwei Gesamtabgasleitungen zusammengeführt werden.

Weitere vorteilhafte Ausführungsformen der erfindungsgemäßen Brennkraftmaschine werden im Zusammenhang mit den Unteransprüchen beschrieben.

Bei Brennkraftmaschinen, bei denen der mindestens eine Zylinderkopf mindestens drei in Reihe angeordnete Zylinder aufweist, sind Ausführungsformen vorteilhaft, die dadurch gekennzeichnet sind, dass die erste Zylindergruppe die außenliegenden Zylinder und die zweite Zylindergruppe den mindestens einen innenliegenden Zylinder umfaßt.

Diese Ausführungsform zeigt, dass erfindungsgemäß eine Zylindergruppe auch nur einen Zylinder umfassen kann, beispielsweise die zweite Zylindergruppe den innenliegenden Zylinder eines Drei-Zylinder-Reihenmotors.

Die Gruppierung der drei Zylinder entsprechend der in Rede stehenden Ausführungsform sorgt für eine symmetrische Anordnung der Abgasleitungen im Zylinderkopf. Die Zündfolge der drei Zylinder, üblicherweise 1 - 2 - 3, ist im Hinblick auf ihre Konfiguration vorliegend von untergeordneter Bedeutung, da völlig unabhängig von der Konfiguration der Zylinder die in einer Zylindergruppe zusammengefaßten beiden Zylinder immer sowohl einen kurzen Zündabstand von 240°KW als auch einen langen Zündabstand von 480°KW aufweisen.

Bei aufgeladenen Brennkraftmaschinen, bei denen der mindestens eine Zylinderkopf vier in Reihe angeordnete Zylinder aufweist, sind Ausführungsformen vorteilhaft, die dadurch gekennzeichnet sind, dass die erste Zylindergruppe die beiden außenliegenden Zylinder und die zweite Zylindergruppe die beiden innenliegenden Zylinder umfaßt, wobei die Abgasleitungen der beiden außenliegenden Zylinder der ersten Zylindergruppe unter Ausbildung eines ersten integrierten Abgaskrümmers innerhalb des Zylinderkopfes zu einer ersten Gesamtabgasleitung und die Abgasleitungen der beiden innenliegenden Zylinder der zweiten Zylindergruppe innerhalb des Zylinderkopfes unter Ausbildung eines zweiten integrierten Abgaskrümmers zu einer zweiten Gesamtabgasleitung zusammenführen.

Diese Konfiguration der Zylinder trägt dem Umstand Rechnung, dass die Zylinder eines Vier-Zylinder-Reihenmotors in der Regel in der Reihenfolge 1 - 3 - 4 - 2 gezündet werden, wobei die Zylinder beginnend mit einem außenliegenden Zylinder der Reihe nach durchnumeriert werden. Die vorgeschlagene Gruppierung der Zylinder sorgt dafür, dass die beiden Zylinder sowohl der ersten als auch der zweiten Zylindergruppe einen Zündabstand von 360°KW aufweisen. Die Aufteilung der Abgasleitungen der vier Zylinder auf die beiden Gesamtabgasleitungen bzw. die beiden Eintrittskanäle der zweiflutigen Turbine ist daher hinsichtlich der zugrundeliegenden Zielsetzung vorliegend optimiert.

Vorteilhaft sind Ausführungsformen der aufgeladenen Brennkraftmaschine, bei denen die beiden Gesamtabgasleitungen der integrierten Abgaskrümmer entlang der Längsachse des Zylinderkopfes versetzt angeordnet sind. Der Versatz ermöglicht eine kompakte Bauweise des mindestens einen Zylinderkopfes und sorgt gleichzeitig für einen ausreichenden d. h. großen Abstand der Gesamtabgasleitungen voneinander. Auf diese Weise verbleibt - trotz kompakter Bauweise - genügend Bauraum zwischen den Gesamtabgasleitungen im Vergleich zu Ausführungsformen, bei denen die Gesamtabgasleitungen entlang der Längsachse d. h. mit Blick in Richtung der Zylinderkopflängsachse keinen Versatz aufweisen. Dies erleichtert die Anordnung von Kühlmittelkanälen im Zylinderkopf, insbesondere zwischen den beiden Gesamtabgasleitungen.

Die Gesamtabgasleitungen der integrierten Abgaskrümmer können aus einer Außenwandung des Zylinderkopfes austreten und zu der zweiflutigen Turbine geführt werden. Vorteilhaft sind aber insbesondere Ausführungsformen, bei denen die zweiflutige Turbine direkt an den Zylinderkopf angeflanscht wird, so dass die Abgasströmungen der Gesamtabgasleitungen direkt vom Zylinderkopf in die Turbine strömen bzw. die aus dem Zylinderkopf austretenden Gesamtabgasleitung sich in die Turbine fortsetzen, was zu einer Verkürzung der Leitungslängen im allgemeinen führt und zu einer kompakten Bauweise der Brennkraftmaschine.

Vorteilhaft sind Ausführungsformen der aufgeladenen Brennkraftmaschine, bei denen die Gesamtabgasleitung des zweiten integrierten Abgaskrümmers der zweiten Zylindergruppe auf der der Montage-Stirnseite abgewandten Seite des ersten integrierten Abgaskrümmers der ersten Zylindergruppe angeordnet ist.

Vorteilhaft sind Ausführungsformen der aufgeladenen Brennkraftmaschine, bei denen jeder Zylinder mindestens zwei Auslaßöffnungen zum Abführen der Abgase aus dem Zylinder aufweist.

Wie bereits in der Beschreibungseinleitung erwähnt wurde, ist es während des Ausschiebens der Abgase im Rahmen des Ladungswechsels ein vorrangiges Ziel, möglichst schnell möglichst große Strömungsquerschnitte freizugeben, um ein effektives Abführen der Abgase zu gewährleisten, weshalb das Vorsehen von mehr als einer Auslaßöffnung je Zylinder vorteilhaft ist.

Vorteilhaft sind dabei Ausführungsformen der aufgeladenen Brennkraftmaschine, bei denen bei Zylindergruppen mit mindestens zwei Zylindern zunächst die Abgasleitungen der mindestens zwei Auslaßöffnungen jedes Zylinders zu einer dem Zylinder zugehörigen Teilabgasleitung zusammenführen bevor diese Teilabgasleitungen zu der Gesamtabgasleitung dieser Zylindergruppe zusammenführen. Die Gesamtwegstrecke aller Abgasleitungen wird hierdurch - weiter - verkürzt.

Das stufenweise Zusammenführen der Abgasleitungen zu einer Gesamtabgasleitung trägt zudem zu einer kompakteren d. h. weniger voluminösen Bauweise des Zylinderkopfes und damit insbesondere zu einer Gewichtsreduzierung und einem effektiveren Packaging im Motorraum bei.

Vorteilhaft sind Ausführungsformen der aufgeladenen Brennkraftmaschine, bei denen im Eintrittsbereich der mindestens einen zweiflutigen Turbine Leitschaufeln zur Beeinflussung der Strömungsrichtung angeordnet sind. Im Gegensatz zu den Laufschaufeln des umlaufenden Laufrades rotieren die Leitschaufeln nicht mit der Welle der Turbine.

Verfügt die Turbine über eine feste unveränderliche Geometrie, sind die Leitschaufeln nicht nur stationär, sondern zudem völlig unbeweglich im Eintrittsbereich angeordnet d.h. starr fixiert. Wird hingegen eine Turbine mit variabler Geometrie eingesetzt, sind die Leitschaufeln zwar auch stationär angeordnet, aber nicht völlig unbeweglich, sondern um ihre Achse drehbar, so daß auf die Anströmung der Laufschaufeln Einfluß genommen werden kann.

Vorteilhaft sind Ausführungsformen der aufgeladenen Brennkraftmaschine, bei denen die mindestens eine zweiflutige Turbine eine Axialturbine ist.

Bei einer Axialturbine erfolgt die Anströmung der Laufradschaufeln im Wesentlichen axial, wobei "im Wesentlichen axial" im Rahmen der vorliegenden Erfindung bedeutet, dass die Geschwindigkeitskomponente in axialer Richtung größer ist als die radiale Geschwindigkeitskomponente. Der Geschwindigkeitsvektor der Anströmung im Bereich des Laufrades verläuft dabei vorzugsweise parallel zur Welle bzw. Achse des Abgasturboladers, falls die Anströmung exakt axial verläuft.

Die Verwendung einer Axialturbine macht die bei Radialturbinen zwingend erforderliche d. h. prinzipbedingt unumgängliche radiale Zuführung des Abgases mittels Spiral- oder Schneckengehäuse entbehrlich, wodurch der Druckverlust im Abgas gemindert und die Abgasenthalpie am Eintritt in die Turbine erhöht werden kann. Die Zuführung des Abgases mittels Spiral- oder Schneckengehäuse erfordert die mehrfache Umlenkung des Abgases bzw. der Abgasströmungen mit großen Richtungsänderungen, wobei jede Richtungsänderung einen Druckverlust in der Abgasströmung bedingt, weshalb dem Abgas an der Turbine weniger Energie entzogen werden kann.

Vorteilhaft sind dabei Ausführungsformen der aufgeladenen Brennkraftmaschine, bei denen der Eintrittsbereich der Axialturbine koaxial zur Welle der Axialturbine verläuft und ausgebildet ist, so daß die Zuströmung des Abgases zur Turbine im Wesentlichen axial erfolgt. Eine derartige Zuführung des Abgases zur Turbine verhindert größere d. h. spürbare Druckverluste in der Abgasströmung.

Der Eintrittsbereich einer Axialturbine zur Zuführung des Abgases kann nämlich grundsätzlich auch als rundum verlaufendes Spiral- oder Schneckengehäuse ausgebildet werden, so dass zumindest im Eintrittsbereich die Strömung des Abgases schräg bzw. radial zur Welle verläuft bzw. geführt wird. Die in Rede stehende Ausführungsform grenzt sich von der Abgaszuführung mittels rundum verlaufendem Spiral- oder Schneckengehäuse ab.

Vorteilhaft sind Ausführungsformen der Brennkraftmaschine, bei denen der mindestens eine Zylinderkopf mit einer Flüssigkeitskühlung ausgestattet ist.

Ein Zylinderkopf mit integrierten Abgaskrümmern ist thermisch höher belastet als ein herkömmlicher Zylinderkopf, bei dem die Abgasleitungen extern zusammengeführt werden, weshalb erhöhte Anforderungen an die Kühlung gestellt werden.

Grundsätzlich besteht die Möglichkeit, die Kühlung in Gestalt einer Luftkühlung oder einer Flüssigkeitskühlung auszuführen. Aufgrund der wesentlich höheren Leistungsfähigkeit einer Flüssigkeitskühlung ist es vorteilhaft, den Zylinderkopf mit einer Flüssigkeitskühlung auszustatten.

Die zweite der Erfindung zugrunde liegende Aufgabe, nämlich ein Verfahren zum Betreiben einer aufgeladenen Brennkraftmaschine der zuvor genannten Art, deren mindestens einer Zylinderkopf mindestens drei Zylinder aufweist, aufzuzeigen, wird durch ein Verfahren gelöst, das dadurch gekennzeichnet ist, dass die mindestens drei Zylinder in der Art betrieben werden, dass die Zylinder einer Zylindergruppe einen möglichst großen Versatz hinsichtlich der Arbeitsprozesse aufweisen.

Das für die erfindungsgemäße Brennkraftmaschine Gesagte gilt auch für das erfindungsgemäße Verfahren, weshalb auf die oben bereits gemachten Ausführungen Bezug genommen wird.

Bei aufgeladenen Brennkraftmaschinen, deren mindestens einer Zylinderkopf vier in Reihe angeordnete Zylinder aufweist und die Abgasleitungen der beiden außenliegenden Zylinder einer ersten Zylindergruppe unter Ausbildung eines ersten integrierten Abgaskrümmers innerhalb des Zylinderkopfes zu einer ersten Gesamtabgasleitung und die Abgasleitungen der beiden innenliegenden Zylinder einer zweiten Zylindergruppe innerhalb des Zylinderkopfes unter Ausbildung eines zweiten integrierten Abgaskrümmers zu einer zweiten Gesamtabgasleitung zusammenführen, sind Verfahrensvarianten vorteilhaft, die dadurch gekennzeichnet sind, dass abwechselnd bei einem außenliegenden Zylinder der ersten Zylindergruppe und einem innenliegenden Zylinder der zweiten Zylindergruppe die Verbrennung initiiert wird.

Die Initiierung d. h. Einleitung der Verbrennung kann sowohl durch eine Fremdzündung, beispielsweise mittels Zündkerze, als auch durch Selbstzündung bzw. Kompressionszündung erfolgen.

Im Folgenden wird die Erfindung anhand eines Ausführungsbeispiels gemäß den Figuren 1 bis 3 näher beschrieben. Hierbei zeigt:
- Fig. 1: in einer perspektivischen Darstellung den Sandkern der im Zylinderkopf einer ersten Ausführungsform der Brennkraftmaschine integrierten Abgasleitungen,
- Fig. 2: den in Figur 1 dargestellten Sandkern in einer Seitenansicht, und
- Fig. 3: schematisch eine Ausführungsform eines Abgasturboladers mit Axialturbine.

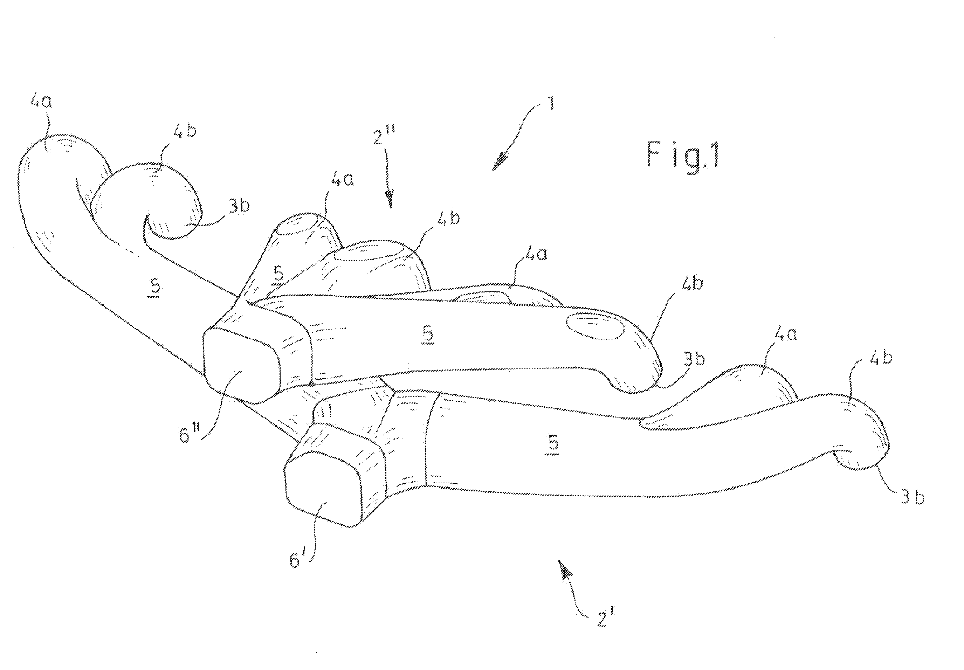

Figur 1 zeigt in einer perspektivischen Darstellung den Sandkern 1 der im Zylinderkopf einer ersten Ausführungsform der Brennkraftmaschine integrierten Abgasleitungen 4a, 4b, 5, 6', 6", so daß Figur 1 prinzipiell auch das System der im Zylinderkopf integrierten Abgasleitungen 4a, 4b, 5, 6', 6" veranschaulicht, weshalb auch die Bezugszeichen für die Abgasleitungen 4a, 4b, 5, 6', 6" eingetragen sind.

Bei dem in Figur 1 dargestellten Sandkern 1 bzw. Abgassystem handelt es sich um die Abgasleitungen 4a, 4b, 5, 6', 6" eines Zylinderkopfes eines Vier-Zylinder-Reihenmotors, bei dem die Zylinder entlang der Längsachse des Zylinderkopfes angeordnet sind. Jeder der vier Zylinder ist mit zwei Auslaßöffnungen 3a, 3b ausgestattet, wobei sich an jede Auslaßöffnung 3a, 3b eine Abgasleitung 4a, 4b anschließt.

Die vier Zylinder sind in der Art konfiguriert, dass sie zwei Gruppen mit jeweils zwei Zylindern bilden. Die erste Zylindergruppe umfaßt die beiden außenliegenden Zylinder und die zweite Zylindergruppe die beiden innenliegenden Zylinder, wobei die Abgasleitungen 4a, 4b der beiden außenliegenden Zylinder der ersten Zylindergruppe unter Ausbildung eines ersten integrierten Abgaskrümmers 2' innerhalb des Zylinderkopfes zu einer ersten Gesamtabgasleitung 6' und die Abgasleitungen 4a, 4b der beiden innenliegenden Zylinder der zweiten Zylindergruppe innerhalb des Zylinderkopfes unter Ausbildung eines zweiten integrierten Abgaskrümmers 2" zu einer zweiten Gesamtabgasleitung 6" zusammenführen.

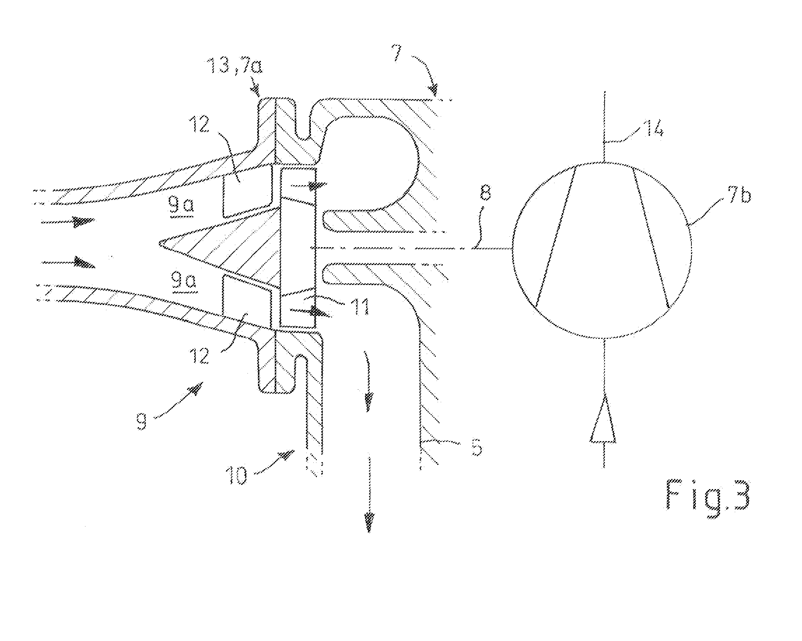

Dabei führen die Abgasleitungen 4a, 4b jedes Zylinders zunächst zu einer dem Zylinder zugehörigen Teilabgasleitung 5 zusammen, bevor die Teilabgasleitungen 5 der Zylinder einer Zylindergruppe anschließend d. h. stromabwärts zu einer Gesamtabgasleitung 6', 6" zusammenführen. Die beiden Gesamtabgasleitungen 6', 6" werden mit einer zweiflutigen Turbine 7a verbunden (siehe Figur 3).

Bei dem in Figur 1 dargestellten Abgassystem sind die beiden Gesamtabgasleitungen 6', 6" der integrierten Abgaskrümmer 2', 2" entlang der Längsachse des Zylinderkopfes versetzt angeordnet. Die Gesamtabgasleitung 6" des zweiten integrierten Abgaskrümmers 2" der zweiten Zylindergruppe liegt dabei auf der der Montage-Stirnseite abgewandten Seite des ersten integrierten Abgaskrümmers 2'.

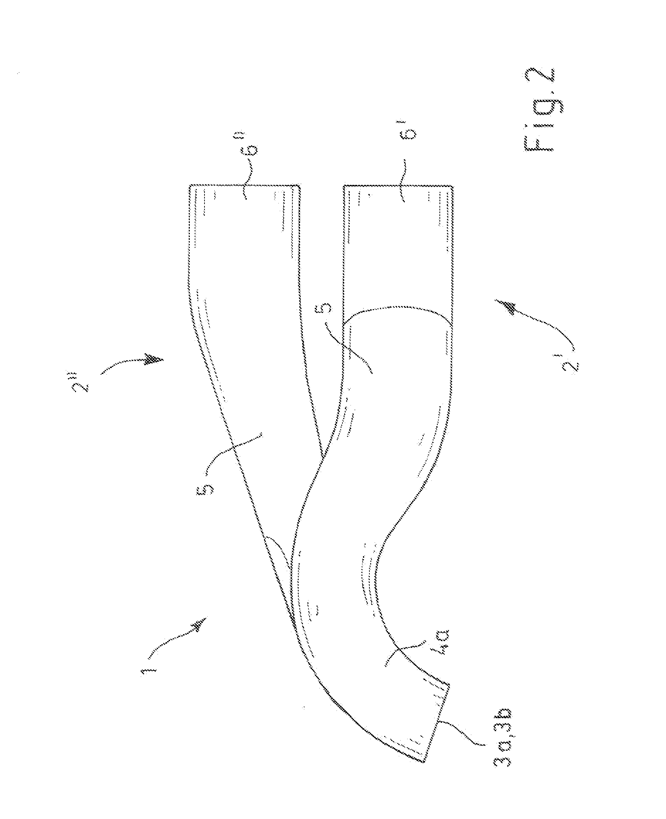

Figur 2 zeigt den in Figur 1 dargestellten Sandkern 1 in einer Seitenansicht mit Blick in Richtung der Längsachse des Zylinderkopfes. Für dieselben Bauteile werden dieselben Bezugszeichen wie in Figur 1 verwendet, weshalb im Übrigen Bezug genommen wird auf Figur 1.

Wie aus Figur 2 ersichtlich ist, liegt die Gesamtabgasleitung 6" des zweiten integrierten Abgaskrümmers 2" der zweiten Zylindergruppe auf der der Montage-Stirnseite abgewandten Seite des ersten integrierten Abgaskrümmers 2' d. h. oberhalb des ersten Abgaskrümmers 2'.

Figur 3 zeigt schematisch eine Ausführungsform eines Abgasturboladers 7, der eine Turbine 7a und einen in einer Ansaugleitung 14 angeordneten Verdichter 7b umfaßt, wobei die Turbine 7a und der Verdichter 7b auf derselben Welle 8 angeordnet sind. Die Turbine 7a ist eine Axialturbine 13, bei der die Anströmung der Schaufeln des auf der Welle 8 angeordneten Laufrades 11 im Wesentlichen axial erfolgt.

Der Eintrittsbereich 9 der Axialturbine 13 zur Zuführung des Abgases ist koaxial zur Welle 8 der Axialturbine 13 ausgebildet, so dass die Zuströmung des Abgases zur Turbine 7a ebenfalls im Wesentlichen axial erfolgt. Die Mittelachse des Eintrittsbereichs 9 fluchtet mit der Achse der Welle 8. Eine derartige Zuführung des Abgases zur Turbine 7a gewährleistet die Bereitstellung eines möglichst energiereichen Abgases an der Turbine 7a.

Die Axialturbine 13 ist eine zweiflutige Axialturbine 13, bei der der Eintrittsbereich 9 zwei voneinander getrennte Eintrittskanäle 9a aufweist. Im Eintrittsbereich 9 der Axialturbine 13 sind Leitschaufeln 12 zur Beeinflussung der Strömungsrichtung angeordnet, welche stationär im Eintrittsbereich 9 angeordnet sind. Die Anströmung der Laufschaufeln 11 erfolgt axial.

Der Austrittsbereich 10 der Axialturbine 13 zur Abführung des Abgases ist radial zur Welle 8 der Axialturbine 13 ausgebildet, so dass die Abströmung bzw. das Abführen des Abgases aus der Turbine 7a im Wesentlichen radial bzw. vorliegend exakt radial erfolgt.

### Bezugszeichen

- 1: Sandkern
- 2': erster integrierter Abgaskrümmer
- 2": zweiter integrierter Abgaskrümmer
- 3a: erste Auslaßöffnung
- 3b: zweite Auslaßöffnung
- 4a: erste Abgasleitung
- 4b: zweite Abgasleitung
- 5: Teilabgasleitung
- 6': Gesamtabgasleitung
- 6": Gesamtabgasleitung
- 7: Abgasturbolader
- 7a: Turbine
- 7b: Verdichter
- 8: Welle
- 9: Eintrittsbereich
- 9a: Eintrittskanal
- 10: Austrittsbereich
- 11: Laufrad, Laufschaufel
- 12: Leitschaufeln
- 13: Axialturbine
- 14: Ansaugleitung

- KW: Kurbelwinkel
- pₘₑ: Mitteldruck

## Patentansprüche

1. Aufgeladene Brennkraftmaschine mit
- mindestens einem Zylinderkopf mit mindestens zwei Zylindern, der an einer Montage-Stirnseite mit einem Zylinderblock verbindbar ist und bei dem jeder Zylinder mindestens eine Auslaßöffnung (3a, 3b) zum Abführen der Abgase aus dem Zylinder aufweist, wobei sich an jede Auslaßöffnung (3a, 3b) eine Abgasleitung (4a, 4b) anschließt, und
- mindestens einer Turbine (7a),
**dadurch gekennzeichnet, dass**
- die mindestens eine Turbine (7a) eine zweiflutige Turbine (7a) ist, die einen Eintrittsbereich (9) mit zwei Eintrittskanälen (9a) aufweist,
- mindestens zwei Zylinder in der Art konfiguriert sind, dass sie zwei Gruppen mit jeweils mindestens einem Zylinder bilden,
- die Abgasleitungen (4a, 4b) der Zylinder jeder Zylindergruppe unter Ausbildung eines integrierten Abgaskrümmers (2', 2") innerhalb des Zylinderkopfes jeweils zu einer Gesamtabgasleitung (6', 6'') zusammenführen, und
- die beiden Gesamtabgasleitungen (6', 6") mit der zweiflutigen Turbine (7a) verbunden sind, wobei jeweils eine Gesamtabgasleitung (6', 6") in einen Eintrittskanal (9a) mündet.

2. Aufgeladene Brennkraftmaschine nach Anspruch 1, bei der der mindestens eine Zylinderkopf mindestens drei in Reihe angeordnete Zylinder aufweist, **dadurch gekennzeichnet, dass** die erste Zylindergruppe die außenliegenden Zylinder und die zweite Zylindergruppe den mindestens einen innenliegenden Zylinder umfaßt.

3. Aufgeladene Brennkraftmaschine nach Anspruch 1 oder 2, bei der der mindestens eine Zylinderkopf vier in Reihe angeordnete Zylinder aufweist, **dadurch gekennzeichnet, dass** die erste Zylindergruppe die beiden außenliegenden Zylinder und die zweite Zylindergruppe die beiden innenliegenden Zylinder umfaßt, wobei die Abgasleitungen (4a, 4b) der beiden außenliegenden Zylinder der ersten Zylindergruppe unter Ausbildung eines ersten integrierten Abgaskrümmers (2') innerhalb des Zylinderkopfes zu einer ersten Gesamtabgasleitung (6') und die Abgasleitungen (4a, 4b) der beiden innenliegenden Zylinder der zweiten Zylindergruppe innerhalb des Zylinderkopfes unter Ausbildung eines zweiten integrierten Abgaskrümmers (2'') zu einer zweiten Gesamtabgasleitung (6'') zusammenführen.

4. Aufgeladene Brennkraftmaschine nach einem der vorherigen Ansprüche, **dadurch gekennzeichnet, dass** die beiden Gesamtabgasleitungen (6', 6") der integrierten Abgaskrümmer (2', 2'') entlang der Längsachse des Zylinderkopfes versetzt angeordnet sind.

5. Aufgeladene Brennkraftmaschine nach einem der vorherigen Ansprüche, **dadurch gekennzeichnet, dass** die Gesamtabgasleitung (6'') des zweiten integrierten Abgaskrümmers (2'') der zweiten Zylindergruppe auf der der Montage-Stirnseite abgewandten Seite des ersten integrierten Abgaskrümmers (2') der ersten Zylindergruppe angeordnet ist.

6. Aufgeladene Brennkraftmaschine nach einem der vorherigen Ansprüche, **dadurch gekennzeichnet, dass** jeder Zylinder mindestens zwei Auslaßöffnungen (3a, 3b) zum Abführen der Abgase aus dem Zylinder aufweist.

7. Aufgeladene Brennkraftmaschine nach Anspruch 6, **dadurch gekennzeichnet, dass** bei Zylindergruppen mit mindestens zwei Zylindern zunächst die Abgasleitungen (4a, 4b) der mindestens zwei Auslaßöffnungen (3a, 3b) jedes Zylinders zu einer dem Zylinder zugehörigen Teilabgasleitung (5) zusammenführen bevor diese Teilabgasleitungen (5) zu der Gesamtabgasleitung (6', 6") der Zylindergruppe zusammenführen.

8. Aufgeladene Brennkraftmaschine nach einem der vorherigen Ansprüche, **dadurch gekennzeichnet, dass** im Eintrittsbereich (9) der mindestens einen zweiflutigen Turbine (7a) Leitschaufeln (12) zur Beeinflussung der Strömungsrichtung angeordnet sind.

9. Aufgeladene Brennkraftmaschine nach einem der vorherigen Ansprüche, **dadurch gekennzeichnet, dass** die mindestens eine zweiflutige Turbine (7a) eine Axialturbine (13) ist.

10. Aufgeladene Brennkraftmaschine nach Anspruch 9, **dadurch gekennzeichnet, dass** der Eintrittsbereich (9) der Axialturbine (13) koaxial zur Welle (8) der Axialturbine (13) verläuft und ausgebildet ist, so dass die Zuströmung des Abgases zur Turbine (7a) im Wesentlichen axial erfolgt.

11. Verfahren zum Betreiben einer aufgeladenen Brennkraftmaschine nach einem der vorherigen Ansprüche, bei der der mindestens eine Zylinderkopf mindestens drei Zylinder aufweist, **dadurch gekennzeichnet, dass** die mindestens drei Zylinder in der Art betrieben werden, dass die Zylinder einer Zylindergruppe einen möglichst großen Versatz hinsichtlich der Arbeitsprozesse aufweisen.

12. Verfahren nach Anspruch 11 zum Betreiben einer aufgeladenen Brennkraftmaschine nach einem der Ansprüche 3 bis 10, **dadurch gekennzeichnet, dass** abwechselnd bei einem außenliegenden Zylinder der ersten Zylindergruppe und einem innenliegenden Zylinder der zweiten Zylindergruppe die Verbrennung initiiert wird.
